# EUROPEAN PATENT APPLICATION

(11) **EP 4 831 238 A1**
(43) Date of publication of application: **28.10.2026**
(21) Application number: 24907971.6
(22) Date of filing: 16.12.2024
(51) Int. Cl.: C08L 23/10, C08L 23/04, C08L 53/00

(54) **POLYPROPYLENE RESIN COMPOSITION AND ARTICLE PRODUCED THEREFROM**

(30) Priority: 21.12.2023 KR 20230188876; 27.11.2024 KR 20240172099
(71) Applicant: LOTTE CHEMICAL CORPORATION, Seoul 05551 (KR)
(72) Inventor: PARK, Seung Wook, Uiwiang-si Gyeonggi-do 16073 (KR); KIM, In Chol, Uiwiang-si Gyeonggi-do 16073 (KR); KIM, Han Pyol, Uiwiang-si Gyeonggi-do 16073 (KR); LEE, Hyeong Shin, Uiwiang-si Gyeonggi-do 16073 (KR)
(74) Representative: Germain Maureau
(86) International application number: PCT/KR2024/020375
(87) International publication number: WO 2025/135688

(57) **Abstract**

A polypropylene resin composition according to the present invention is characterized by comprising: a polypropylene resin; and a melt blend of about 65 to about 99 weight% of an ultra-low density polyethylene having a density of about 0.88 to about 0.91 g/cm³ as measured in accordance with ISO 1183-1, and about 1 to about 35 weight% of a styrene-based thermoplastic elastomer. The polypropylene resin composition has excellent impact resistance, rigidity, hardness, and thermal deformation properties, and an excellent balance of these physical properties.

## Description

### [Technical Field]

The present invention relates to a polypropylene resin composition and a molded article produced therefrom. More specifically, the present invention relates to a polypropylene resin composition having excellent impact resistance, stiffness, hardness, thermal deformation characteristics, a balance of these physical properties, and the like, and a molded article produced therefrom.

### [Background Art]

A polyolefin resin is a material that is excellent in chemical resistance, weather resistance, processability, and the like, and thus is easily produced in the form of an injection molded article, a film, and a blow molded article, and is widely used in fields such as electrical components, automobiles, building materials, and the like.

However, among these polyolefin resins, a block polypropylene resin lacks impact resistance and the like, and thus its application to uses for automobile safety parts and the like is limited, and a random polypropylene resin (propylene-ethylene random copolymer) lacks flexural modulus, heat resistance, and the like, and thus its application to uses for a large-sized molded article or uses used in a frozen or refrigerated state is limited.

In order to improve impact resistance and the like of a polypropylene resin, a method of applying a rubber component material to the polypropylene resin is used.

However, in the case of a typical rubber component material, compatibility with a polypropylene resin is poor, and accordingly, there is a concern that thermal deformation characteristics and the like of the resin composition and the molded article may be deteriorated.

Therefore, there is a need for the development of a polypropylene resin composition having excellent impact resistance, stiffness, hardness, thermal deformation characteristics, a balance of these physical properties, and the like.

The background art of the present invention is disclosed in Korean Patent Registration No. 10-0842162 and the like.

### [Disclosure]

### [Technical Problem]

It is one object of the present invention to provide a polypropylene resin composition having excellent impact resistance, stiffness, hardness, thermal deformation characteristics, a balance of these physical properties, and the like.

It is another object of the present invention to provide a molded article formed from the polypropylene resin composition.

The above and other objects of the present invention will become apparent from the detailed description of the following embodiments.

### [Technical Solution]

1. One aspect of the present invention relates to a polypropylene resin composition. The polypropylene resin composition comprises a polypropylene resin; and a melt blend of about 65 to about 99 wt% of a very low density polyethylene having a density of about 0.88 to about 0.91 g/cm³ measured in accordance with ISO 1183-1 and about 1 to about 35 wt% of a styrene-based thermoplastic elastomer.
2. In embodiment 1, the polypropylene resin composition may comprise about 100 parts by weight of the polypropylene resin; and about 0.1 to about 50 parts by weight of the melt blend.
3. In embodiment 1 or 2, the polypropylene resin may comprise at least one of a homo polypropylene resin, a block polypropylene resin, and a random polypropylene resin.
4. In Embodiments 1 to 3, the polypropylene resin may have a melt-flow index of about 10 to about 1,500 g/10 min measured under conditions of 230°C and a load of 2.16 kg in accordance with ASTM D1238.
5. In Embodiments 1 to 4, the very low density polyethylene may have a melt-flow index of about 1 to about 20 g/10 min measured under conditions of 230°C and a load of 2.16 kg in accordance with ASTM D1238.
6. In Embodiments 1 to 5, the styrene-based thermoplastic elastomer may comprise at least one of a styrene-ethylene-butylene-styrene block copolymer, a styrene-ethylene-propylene-styrene block copolymer, a styrene-butadiene-styrene block copolymer, a styrene-isoprene-styrene block copolymer, or a styrene-butadiene-butylene-styrene block copolymer.
7. In Embodiments 1 to 6, the styrene-based thermoplastic elastomer may have a styrene-based monomer content of about 5 to about 50 wt%.
8. In Embodiments 1 to 7, the styrene-based thermoplastic elastomer may have a weight average molecular weight of about 100,000 to about 450,000 g/mol.
9. In Embodiments 1 to 8, the polypropylene resin composition may have a notched Izod impact strength of about 10 to about 50 kJ/m², measured on a specimen having a size of 80 mm × 10 mm × 4 mm at 23°C in accordance with ISO 180.
10. In Embodiments 1 to 9, the polypropylene resin composition may have a tensile strength of 20 to 40 MPa measured on a specimen having a thickness of 4 mm at a condition of 50 mm/min in accordance with ISO 527-1A, and may have a tensile elongation of about 100 to about 350% measured on a specimen having a thickness of 4 mm at a condition of 50 mm/min in accordance with ISO 527.
11. In Embodiments 1 to 10, the polypropylene resin composition may have a flexural modulus of about 1,300 to about 1,900 MPa measured on a specimen having a size of 80 mm × 10 mm × 4 mm at a crosshead speed condition of 2 mm/min in accordance with ISO 178.
12. In Embodiments 1 to 11, the polypropylene resin composition may have a Shore A hardness of about 70 to about 110 measured on a specimen having a thickness of 6 mm with a Shore A durometer in accordance with ISO 7619-1.
13. In Embodiments 1 to 12, the polypropylene resin composition may have a heat deflection temperature (HDT) of about 90 to about 120°C measured on a specimen having a size of 80 mm × 10 mm × 4 mm under conditions of 0.45 MPa and a heating rate of 120°C/hr in accordance with ISO 75.
14. In Embodiments 1 to 13, the polypropylene resin composition may have a morphology in which the polypropylene resin is a continuous phase, the very low density polyethylene is a dispersed phase, and the styrene-based thermoplastic elastomer is present at an interface between the continuous phase and the dispersed phase.
15. Another aspect of the present invention relates to a molded article. The molded article is formed of the polypropylene resin composition according to any one of embodiments 1 to 14.

### [Advantageous Effects]

The present invention has an effect of providing a polypropylene resin composition having excellent impact resistance, stiffness, hardness, heat deflection properties, and balance of physical properties thereof, and a molded article formed therefrom.

### [Best Mode]

Hereinafter, embodiments of the present invention will be described in detail.

A polypropylene resin composition according to the present invention comprises (A) a polypropylene resin; and (B) a melt blend of a very low density polyethylene and a styrene-based thermoplastic elastomer.

As used herein to represent a specific numerical range, "a to b" is defined as "≥a and ≤b".

### (A) Polypropylene resin

The polypropylene resin according to an embodiment of the present invention is applied together with a melt blend of a very low density polyethylene and a styrene-based thermoplastic elastomer to improve impact resistance, stiffness, hardness, heat deflection properties, and balance of physical properties of the polypropylene resin composition, and a polypropylene resin used in common thermoplastic resin compositions may be used.

In some embodiments, the polypropylene resin may comprise at least one of a homo polypropylene resin, a block polypropylene resin, and a random polypropylene resin. Here, the block polypropylene resin may be a block polypropylene resin composed of a homo polypropylene block and an ethylene-propylene copolymer block and/or a homo polyethylene block, and the random polypropylene resin may be a propylene-ethylene random copolymer.

In some embodiments, the polypropylene resin may have a melt-flow index (MI) of about 10 to about 1,500 g/10 min, for example, about 15 to about 1,400 g/10 min, measured under conditions of 230°C and a load of 2.16 kg in accordance with ASTM D1238. Within this range, the polypropylene resin composition may have excellent mechanical properties, moldability, and the like.

### (B) Melt blend of very low density polyolefin and styrene-based thermoplastic elastomer

The melt blend of an very low density polyolefin and a styrene-based thermoplastic elastomer according to an embodiment of the present invention is applied together with a polypropylene resin or the like to improve impact resistance, stiffness, hardness, heat deflection properties, and balance of physical properties of a polypropylene resin composition.

In some embodiments, the very low density polyethylene (VLDPE) may have a density of about 0.88 to about 0.91 g/cm³, for example, about 0.883 to about 0.90 g/cm³, measured in accordance with ISO 1183-1. When the density of the very low density polyethylene is less than about 0.88 g/cm³, the stiffness, heat deflection properties, and the like of the polypropylene resin composition (molded article) may be deteriorated, and when it exceeds about 0.90 g/cm³, the stiffness, impact resistance, and the like of the polypropylene resin composition may be deteriorated.

In some embodiments, the very low density polyethylene may have a melt-flow index of about 1 to about 20 g/10 min measured under conditions of 190°C and a load of 2.16 kg in accordance with ASTM D1238. Within this range, the moldability and the like of the polypropylene resin composition may be excellent.

In some embodiments, the very low density polyethylene may have a weight average molecular weight of about 100,000 to about 550,000 g/mol, for example, about 150,000 to about 500,000 g/mol, measured by gel permeation chromatography (GPC). Within this range, the mechanical properties, elasticity, and the like of the polypropylene resin composition may be excellent.

In some embodiments, the very low density polyethylene may be comprised in an amount of about 65 to about 99 wt%, for example, about 70 to about 95 wt%, based on 100 wt% of the total melt blend. When the content of the very low density polyethylene is less than about 65 wt% based on 100 wt% of the total melt blend, the stiffness, heat deflection properties, and the like of the polypropylene resin composition may be deteriorated, and when it exceeds about 99 wt%, the stiffness, impact resistance, and the like of the polypropylene resin composition may be deteriorated.

In some embodiments, the styrene-based thermoplastic elastomer may comprise a styrene-ethylene-butylene-styrene block copolymer, a styrene-ethylene-propylene-styrene block copolymer, a styrene-butadiene-styrene block copolymer, a styrene-isoprene-styrene block copolymer, a styrene-butadiene-butylene-styrene block copolymer, a combination thereof, or the like.

In some embodiments, the styrene-based thermoplastic elastomer may have a styrene-based monomer content of about 5 to about 50 wt%, for example, about 5 to about 45 wt%. Within this range, the polypropylene resin composition may have excellent mechanical properties, elasticity, and the like.

In some embodiments, the styrene-based thermoplastic elastomer may have a weight average molecular weight of about 100,000 to about 450,000 g/mol, for example, about 150,000 to about 400,000 g/mol, measured by gel permeation chromatography (GPC). Within this range, the polypropylene resin composition may have excellent mechanical properties, moldability, and the like.

In some embodiments, the styrene-based thermoplastic elastomer may be comprised in an amount of about 1 to about 35 wt%, for example, about 5 to about 30 wt%, based on 100 wt% of the total melt blend. When the content of the styrene-based thermoplastic elastomer is less than about 1 wt% based on 100 wt% of the total melt blend, the stiffness, impact resistance, and the like of the polypropylene resin composition may be deteriorated, and when it exceeds about 35 wt%, the stiffness, heat deflection properties, and the like of the polypropylene resin composition may be deteriorated.

In some embodiments, the melt blend may be prepared according to a manufacturing method comprising: preparing a mixture by mixing the very low density polyethylene and the styrene-based thermoplastic elastomer; and melt-extruding the mixture.

In some embodiments, the melt-extruding may be performed at about 150 to about 250°C, for example, about 170 to about 230°C, using a common twin-screw extruder. Within this range, the polypropylene resin composition may have excellent mechanical properties, heat deflection properties, hardness, balance of physical properties, and the like.

In some embodiments, the melt blend may be prepared in a pellet form, and the prepared pellets may be applied to various thermoplastic resin compositions and molded articles (products), or the melt blend alone may be manufactured into molded articles (products) through various molding methods such as injection molding, extrusion molding, vacuum molding, and casting molding. Such molding methods are well known by those skilled in the art to which the present invention pertains.

In some embodiments, the melt blend may be in a form of a mixture of the very low density polyethylene as a continuous phase and the styrene-based thermoplastic elastomer as a dispersed phase, and an average particle size of the dispersed phase measured by a transmission electron microscope may be about 0.1 to about 3 µm, for example, about 0.3 to about 1 µm.

In some embodiments, the melt blend may be comprised in an amount of about 0.1 to about 50 parts by weight, for example, about 1 to about 30 parts by weight, specifically about 5 to about 25 parts by weight, based on about 100 parts by weight of the polypropylene resin. When the content of the melt blend is less than about 0.1 parts by weight based on about 100 parts by weight of the polypropylene resin, the impact resistance, stiffness, and the like of the polypropylene resin composition may be deteriorated, and when it exceeds about 50 parts by weight, the stiffness, hardness, heat deflection properties, and the like of the polypropylene resin composition may be deteriorated.

In some embodiments, the polypropylene resin composition according to the present invention may further comprise additives included in common thermoplastic resin compositions. Examples of the additives may include flame retardants, anti-dripping agents, stabilizers, slip agents, pigments, dyes, mixtures thereof, and the like, but are not limited thereto. When the additives are used, the content thereof may be about 0.001 to about 40 parts by weight, for example, about 0.1 to about 10 parts by weight, based on about 100 parts by weight of the polypropylene resin, but is not limited thereto.

The polypropylene resin composition according to one embodiment of the present invention may be in a form of pellets prepared by mixing the constituents and melt-extruding the mixture at about 180 to about 320°C, for example, about 200 to about 300°C, using a conventional twin-screw extruder.

In some embodiments, the polypropylene resin composition may have a form in which the polypropylene resin is a continuous phase, the very low density polyethylene is a dispersed phase, and the styrene-based thermoplastic elastomer is present at an interface between the continuous phase and the dispersed phase. Specifically, the dispersed phase (very low density polyethylene) may appear to form a core-shell form (a shell form in which the styrene-based thermoplastic elastomer covers at least a portion of a core of the very low density polyethylene) with the styrene-based thermoplastic elastomer at the interface between the continuous phase (polypropylene resin) and the dispersed phase.

In some embodiments, the core-shell type dispersed phase may have an average particle diameter of about 0.1 to about 3 µm, for example, about 0.3 to about 1 µm, measured by using a transmission electron microscope (TEM, manufacturer: JEOL, device name: JEM-1400) after staining a specimen, which is sliced with a cryomicrotome, with 0.5% ruthenium tetroxide. Within this range, the mechanical properties and the like of the polypropylene resin composition may be excellent.

In some embodiments, the polypropylene resin composition may have a notched Izod impact strength of about 10 to about 50 kJ/m², for example, about 10.5 to about 45 kJ/m², measured on a specimen having a size of 80 mm × 10 mm × 4 mm at 23°C in accordance with ISO 180.

In some embodiments, the polypropylene resin composition may have a tensile strength of about 20 to about 40 MPa, for example, about 20 to about 30 MPa, measured on a 4 mm thick specimen at a rate of 50 mm/min in accordance with ISO 527-1A.

In some embodiments, the polypropylene resin composition may have a tensile elongation of about 100 to about 350%, for example, about 110 to about 300%, measured on a 4 mm thick specimen at a rate of 50 mm/min in accordance with ISO 527.

In some embodiments, the polypropylene resin composition may have a flexural modulus of about 1,300 to about 1,900 MPa, for example, about 1,350 to about 1,850 MPa, measured on a specimen having a size of 80 mm × 10 mm × 4 mm at a crosshead speed of 2 mm/min in accordance with ISO 178.

In some embodiments, the polypropylene resin composition may have a Shore A hardness of about 70 to about 110, for example, about 75 to about 100, measured on a 6 mm thick specimen using a Shore A hardness tester in accordance with ISO 7619-1.

In some embodiments, the polypropylene resin composition may have a heat deflection temperature (HDT) of about 90 to about 120°C, for example, about 90 to about 110°C, measured on a specimen having a size of 80 mm × 10 mm × 4 mm under conditions of 0.45 MPa and a heating rate of 120°C/hr in accordance with ISO 75.

A molded article according to the present invention is formed from the polypropylene resin composition. The polypropylene resin composition may be prepared in a pellet form, and the prepared pellets may be manufactured into various molded articles (products) through various molding methods such as injection molding, extrusion molding, vacuum molding, and casting molding. Such molding methods are well known by those skilled in the art to which the present invention pertains.

In some embodiments, the molded article is useful for interior/exterior materials of automobiles, housings of home appliances, and the like, due to its excellent impact resistance, stiffness, heat deflection properties, hardness, and balance of physical properties thereof.

### [Mode for Invention]

Next, the present invention will be described in more detail with reference to some examples. It should be understood that these examples are provided for illustration only and are not to be construed in any way as limiting the invention.

### EXAMPLE

Details of components used in Examples and Comparative Examples are as follows.

### (A) Polypropylene resin

A polypropylene resin (manufacturer: Polymirae, product name: EA5074, melt-flow index: about 30 g/10 min) was used.

### (B) Very low density polyethylene (VLDPE) and styrene-based thermoplastic elastomer

(B1) A melt blend prepared by melt-extruding 85 wt% of a very low density polyethylene having a density of about 0.885 g/cm3 and 15 wt% of a styrene-ethylene-butylene-styrene block copolymer (manufacturer: SINOPEC, product name: YH-503T) at about 200°C using a twin-screw extruder was used.

(B2) A melt blend prepared by melt-extruding 85 wt% of a very low density polyethylene having a density of about 0.865 g/cm3 and 15 wt% of a styrene-ethylene-butylene-styrene block copolymer (manufacturer: SINOPEC, product name: YH-503T) at about 200°C using a twin-screw extruder was used.

(B3) A melt blend prepared by melt-extruding 85 wt% of a very low density polyethylene having a density of about 0.912 g/cm3 and 15 wt% of a styrene-ethylene-butylene-styrene block copolymer (manufacturer: SINOPEC, product name: YH-503T) at about 200°C using a twin-screw extruder was used.

(B4) A melt blend prepared by melt-extruding 50 wt% of a very low density polyethylene having a density of about 0.885 g/cm3 and 50 wt% of a styrene-ethylene-butylene-styrene block copolymer (manufacturer: SINOPEC, product name: YH-503T) at about 200°C using a twin-screw extruder was used.

(B5) A melt blend prepared by melt-extruding 99.5 wt% of a very low density polyethylene having a density of about 0.885 g/cm3 and 0.5 wt% of a styrene-ethylene-butylene-styrene block copolymer (manufacturer: SINOPEC, product name: YH-503T) at about 200°C using a twin-screw extruder was used.

(B6) 85 wt% of a very low density polyethylene having a density of about 0.885 g/cm3 and 15 wt% of a styrene-ethylene-butylene-styrene block copolymer (manufacturer: SINOPEC, product name: YH-503T) were simply mixed.

### Examples 1 to 3 and Comparative Examples 1 to 7

Pellets were prepared by adding the respective constituents in amounts as described in Tables 1, 2, and 3 below, and then extruding the same at about 250°C. The extrusion was performed using a twin-screw extruder having an L/D of 48 and a diameter of 75 mm, and the prepared pellets were dried at about 80°C for about 2 hours or more and then injected using a 110-ton injection molding machine (molding temperature: about 210°C, mold temperature: about 50°C) to prepare specimens. Physical properties of the prepared specimens were evaluated by the following methods, and the results thereof are shown in Tables 1, 2, and 3 below.

### Property evaluation

(1) Notched Izod impact strength (unit: kJ/m²): The notched Izod impact strength was measured on a specimen having a size of 80 mm × 10 mm × 4 mm at 23°C in accordance with ISO 180.
(2) Tensile strength (unit: MPa): The tensile strength was measured on a 4 mm thick specimen at a rate of 50 mm/min in accordance with ISO 527-1A.
(3) Tensile elongation (unit: %): The tensile elongation was measured on a 4 mm thick specimen at a rate of 50 mm/min in accordance with ISO 527.
(4) Flexural modulus (unit: MPa): The flexural modulus was measured on a specimen having a size of 80 mm × 10 mm × 4 mm at a crosshead speed of 2.0 mm/min in accordance with ISO 178.
(5) Shore A hardness: The Shore A hardness was measured on a 6 mm thick specimen using a Shore A hardness tester (manufacturer: Mitutoyo, device name: 810-220K) in accordance with ISO 7619-1.
(6) Heat deflection temperature (unit: °C): The heat deflection temperature (HDT) was measured on a specimen having a size of 80 mm × 10 mm × 4 mm under conditions of 0.45 MPa and a heating rate of 120°C/hr using a heat deflection temperature tester (manufacturer: Toyoseiki, device name: 533) in accordance with ISO 75.

**Table 1**

| | | Example | | |
|---|---|---|---|---|
| | | 1 | 2 | 3 |
| (A) (parts by weight) | | 100 | 100 | 100 |
| (B) (parts by weight) | (B1) | 5 | 17.5 | 25 |
| | (B2) | - | - | - |
| | (B3) | - | - | - |
| | (B4) | - | - | - |
| | (B5) | - | - | - |
| | (B6) | | | |
| Notched Izod impact strength | | 10.5 | 28.5 | 34 |
| Tensile strength | | 27 | 23 | 20.8 |
| Tensile elongation | | 118 | 168 | 210 |
| Flexural modulus | | 1,760 | 1,430 | 1,350 |
| Shore A hardness | | 98 | 88 | 81 |
| Heat deflection temperature | | 103 | 95 | 90 |

**Table 2**

| | Comparative Example | | | | |
|---|---|---|---|---|---|
| | 1 | 2 | 3 | 4 | |
| (A) (parts by weight) | 100 | 100 | 100 | 100 | |
| (B) (parts by weight) | (B1) | 0.01 | 55 | - | - |
| | (B2) | - | - | 17.5 | - |
| | (B3) | - | - | - | 17.5 |
| | (B4) | - | - | - | - |
| | (B5) | - | - | - | - |
| | (B6) | - | - | - | - |
| Notched Izod impact strength | | 5.3 | N.B. | 29.6 | 12.4 |
| Tensile strength | | 28 | 14.6 | 18.8 | 24.2 |
| Tensile elongation | | 10 | 600↑ | 171 | 48 |
| Flexural modulus | | 1,790 | 892 | 1,208 | 1,540 |
| Shore A hardness | | 99 | 58 | 86 | 90 |
| Heat deflection temperature | | 117 | 64 | 87 | 99 |

**Table 3**

| | | Comparative Example | | |
|---|---|---|---|---|
| | | 5 | 6 | 7 |
| (A) (parts by weight) | | 100 | 100 | 100 |
| (B) (parts by weight) | (B1) | - | - | |
| | (B2) | - | - | |
| | (B3) | - | - | |
| | (B4) | 17.5 | - | |
| | (B5) | - | 17.5 | |
| | (B6) | - | - | 17.5 |
| Notched Izod impact strength | | 32.6 | 19.8 | 19.7 |
| Tensile strength | | 18.9 | 23.4 | 23.4 |
| Tensile elongation | | 245 | 62 | 92 |
| Flexural modulus | | 1,345 | 1,502 | 1,492 |
| Shore A hardness | | 80 | 89 | 86 |
| Heat deflection temperature | | 89 | 97 | 93 |

From the above results, it can be seen that the polypropylene resin composition of the invention is excellent in impact resistance (notched Izod impact strength), stiffness (tensile strength, tensile elongation, and flexural modulus), hardness (Shore A hardness), heat deflection properties (heat deflection temperature), and balance of physical properties thereof.

Conversely, in the case of Comparative Example 1, in which the content of the melt blend of the very low density polyethylene and the styrene-based thermoplastic elastomer is less than the range of the invention, it can be seen that impact resistance, stiffness, and the like are deteriorated. In the case of Comparative Example 2, in which the content of the melt blend of the very low density polyethylene and the styrene-based thermoplastic elastomer exceeds the range of the invention, it can be seen that stiffness, hardness, heat deflection properties, and the like are deteriorated.

In addition, in the case of Comparative Example 3, in which the melt blend (B2) using the very low density polyethylene having a density less than the range of the invention was applied instead of the melt blend of the invention, it can be seen that stiffness, heat deflection properties, and the like are deteriorated. In the case of Comparative Example 4, in which the melt blend (B3) using the very low density polyethylene having a density exceeding the range of the invention was applied, it can be seen that stiffness and the like are deteriorated. In the case of Comparative Example 5, in which the melt blend (B4) having the content of the very low density polyethylene less than the range of the invention was applied, it can be seen that stiffness, heat deflection properties, and the like are deteriorated. In the case of Comparative Example 6, in which the melt blend (B5) having the content of the very low density polyethylene exceeding the range of the invention was applied, it can be seen that stiffness and the like are deteriorated. In the case of Comparative Example 7, in which (B6), which is a simple mixture of the very low density polyethylene and the styrene-based thermoplastic elastomer, was applied, it can be seen that stiffness and the like are deteriorated.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the invention should be defined by the appended claims rather than by the foregoing description, and the claims and equivalents thereto are intended to cover such modifications and the like as would fall within the scope of the invention.

## Claims

1. A polypropylene resin composition comprising:
a polypropylene resin; and
a melt blend including about 65 to about 99 wt% of a very low density polyethylene having a density of about 0.88 to about 0.91 g/cm³ measured in accordance with ISO 1183-1 and about 1 to about 35 wt% of a styrene-based thermoplastic elastomer.

2. The polypropylene resin composition according to claim 1, comprising about 100 parts by weight of the polypropylene resin and about 0.1 to about 50 parts by weight of the melt blend.

3. The polypropylene resin composition according to claim 1 or 2, wherein the polypropylene resin includes one or more selected from the group consisting of a homo polypropylene resin, a block polypropylene resin, and a random polypropylene resin.

4. The polypropylene resin composition according to any one of claims 1 to 3, wherein the polypropylene resin has a melt-flow index of about 10 to about 150 g/10 min measured at 230°C under a load of 2.16 kg in accordance with ASTM D1238.

5. The polypropylene resin composition according to any one of claims 1 to 4, wherein the very low density polyethylene has a melt-flow index of about 1 to about 20 g/10 min measured at 190°C under a load of 2.16 kg in accordance with ASTM D1238.

6. The polypropylene resin composition according to any one of claims 1 to 5, wherein the styrene-based thermoplastic elastomer comprises at least one of a styrene-ethylene-butylene-styrene block copolymer, a styrene-ethylene-propylene-styrene block copolymer, a styrene-butadiene-styrene block copolymer, a styrene-isoprene-styrene block copolymer, or a styrene-butadiene-butylene-styrene block copolymer.

7. The polypropylene resin composition according to any one of claims 1 to 6, wherein the styrene-based thermoplastic elastomer has a content of a styrene-based monomer of about 5 to about 50 wt%.

8. The polypropylene resin composition according to any one of claims 1 to 7, wherein the styrene-based thermoplastic elastomer has a weight average molecular weight of about 100,000 to about 450,000 g/mol.

9. The polypropylene resin composition according to any one of claims 1 to 8, wherein the polypropylene resin composition has a notched Izod impact strength of about 10 to about 50 kJ/m² measured on a specimen having a size of 80 mm × 10 mm × 4 mm at 23°C in accordance with ISO 180.

10. The polypropylene resin composition according to any one of claims 1 to 9, wherein the polypropylene resin composition has a tensile strength of 20 to 40 MPa measured on a 4 mm thick specimen at a rate of 50 mm/min in accordance with ISO 527-1A, and a tensile elongation of about 100 to about 350% measured on a 4 mm thick specimen at a rate of 50 mm/min in accordance with ISO 527.

11. The polypropylene resin composition according to any one of claims 1 to 10, wherein the polypropylene resin composition has a flexural modulus of about 1,300 to about 1,900 MPa measured on a specimen having a size of 80 mm × 10 mm × 4 mm at a crosshead speed of 2 mm/min in accordance with ISO 178.

12. The polypropylene resin composition according to any one of claims 1 to 11, wherein the polypropylene resin composition has a Shore A hardness of about 70 to about 110 measured on a 6 mm thick specimen using a Shore A hardness tester in accordance with ISO 7619-1.

13. The polypropylene resin composition according to any one of claims 1 to 12, wherein the polypropylene resin composition has a heat deflection temperature (HDT) of about 90 to about 120°C measured on a specimen having a size of 80 mm × 10 mm × 4 mm under conditions of 0.45 MPa and a heating rate of 120°C/hr in accordance with ISO 75.

14. The polypropylene resin composition according to any one of claims 1 to 13, wherein the polypropylene resin is a continuous phase, the very low density polyethylene is a dispersed phase, and the styrene-based thermoplastic elastomer is present at an interface between the polypropylene resin and the very low density polyethylene.

15. A molded article formed from the polypropylene resin composition according to any one of claims 1 to 14.
